Europäisches Patentamt

European Patent Office

Office européen des brevets

(19)

(11) **EP 0 441 941 B1**

(12) **FASCICULE DE BREVET EUROPEEN**

(45) Date de publication et mention
de la délivrance du brevet:
**14.02.1996 Bulletin 1996/07**

(21) Numéro de dépôt: **90913705.1**

(22) Date de dépôt: **24.08.1990**

(51) Int Cl.⁶: **G06T 7/20**

(86) Numéro de dépôt international:
**PCT/FR90/00628**

(87) Numéro de publication internationale:
**WO 91/03797 (21.03.1991 Gazette 1991/07)**

(54) **PROCEDE ET DISPOSITIF D'ESTIMATION ET DE CODAGE HIERARCHISE DU MOUVEMENT DE SEQUENCES D'IMAGES**

VERFAHREN UND GERÄT ZUR SCHÄTZUNG UND HIERARCHISCHEN KODIERUNG VON BEWEGUNG IN BILDFOLGEN

METHOD AND DEVICE FOR ESTIMATION AND HIERARCHICAL CODING OF THE MOTION OF IMAGE SEQUENCES

(84) Etats contractants désignés:
**AT BE CH DE DK ES FR GB IT LI LU NL SE**

(30) Priorité: **29.08.1989 FR 8911328**

(43) Date de publication de la demande:
**21.08.1991 Bulletin 1991/34**

(73) Titulaire: **THOMSON multimedia
F-92400 Courbevoie (FR)**

(72) Inventeur: **KERDRANVAT, Michel
F-35700 Rennes (FR)**

(74) Mandataire: **Ruellan-Lemonnier, Brigitte et al
F-92400 Courbevoie (FR)**

(56) Documents cités:
**EP-A- 0 293 644**

- **IEEE Transactions on Pattern Analysis and Machine Intelligence, Volume 11, No. 7, Juillet 1989, IEEE (New York, US) P. STROBACH: "Quadtree-Structured linear Prediction Models for Image Sequence Processing", pages 742-748**
- **Proceedings IEEE Computer Society Conference on Computer Vision and Pattern Processing, 22-26 Juin 1986, Miami Beach, Florida, IEEE, (Washington, US) L.R. WILLIAMS et al.: "A Coarse-to-fine Control Strategy for Stereo and Motion on a Mesh-Connected Computer", pages 219-226**
- **Proceedings Workshop on Motion: Representation and Analysis, Charleston, South Carolina, 7-9 Mai 1986, IEEE, (Washington, US) W. ENKELMANN: "Investigations of Multigrid Algorithms for the Estimation of Optical Flow Fields in Image Sequences", pages 81-87**

**EP 0 441 941 B1**

## Description

L'invention se rapporte au domaine du traitement d'images, et plus particulièrement à l'estimation de mouvement utilisée dans les chaînes de transmission d'images notamment en vue de réduire le débit d'informations, et a pour objet un procédé et le dispositif correspondant, d'estimation et de codage hiérarchisé et du mouvement de séquences d'images. De tels procédés d'estimation et de codage hiérarchisé sont bien connus de l'homme de l'art (voir notamment le brevet EP-A-293 644).

L'information d'estimation de mouvement est de plus en plus utilisée dans toutes les parties d'une chaîne de transmission de télévision en haute définition :

- au stade de la production des images ;
- au stade de la transmission des images ;
- et au stade de la réception de ces mêmes images.

Ainsi l'estimation de mouvement devient une fonction importante dans la chaîne de transmission d'images notamment en haute définition.

Actuellement chaque équipement de la chaîne de transmission a son propre estimateur de mouvement. Il semble donc très intéressant de prévoir un seul estimateur de mouvement, dans le studio de production, qui soit capable d'alimenter chaque équipement de la chaîne de télévision haute définition. Mais comme chaque équipement ne requiert pas les mêmes caractéristiques pour l'information de mouvement, l'estimateur de mouvement unique doit avoir plusieurs sorties possibles, ou être paramétrable.

L'invention a pour objet un procédé et le dispositif correspondant, d'estimation et de codage du mouvement, développé pour permettre le codage de séquences d'images de manière simple, cette information de mouvement étant exactement adaptée à un codage de type "quadtree" auquel, en outre, une régulation de débit est aisément applicable.

De plus, dans le but d'éviter une opération d'estimation de mouvement à la réception qui augmenterait la complexité du récepteur, cette information de mouvement peut être transmise, notamment sur une voie auxiliaire de transmission de données numériques d'assistance au décodage de séquences d'images. Plusieurs avantages résultent d'une estimation de mouvement au studio de production :

- le premier est que la complexité et donc les performances du système d'estimation de mouvement peuvent être plus grandes au studio de production qu'elles ne pourraient l'être dans un équipement de réception ; ainsi un estimateur de mouvement performant et solide peut être construit ;
- le second est que, au studio de production, toutes les informations de la séquence d'images à coder sont disponibles et que l'estimation de mouvement est donc plus performante ;
- de plus, une estimation de mouvement qui serait effectuée à la réception serait perturbée par le bruit de transmission.

Selon l'invention, un procédé d'estimation et de codage hiérarchisé du mouvement de séquences de trames d'images consiste :

- à un premier niveau de partition, à découper l'image courante en macroblocs de $2^{P+1}.2^{P+1}$ pixels et à déterminer un premier champ de vecteurs mouvement, chaque vecteur mouvement étant associé à un macrobloc, en utilisant un algorithme d'estimation itératif et récursif initialisé par des vecteurs mouvement estimés pour l'image précédente,
- puis, à un deuxième niveau de partition, à découper en quadrants chacun des macroblocs et à déterminer, pour les blocs qui en résultent, un second champ de vecteur mouvement en utilisant le même algorithme d'estimation mais initialisé par le champ de vecteurs mouvement estimé au niveau précédent,
- puis à un $i^{\text{ème}}$ niveau de partition, $i = 3$ à p, à découper chacun des blocs considérés au niveau i-1 en quadrants et à déterminer, pour les blocs qui en résultent, un $i^{\text{ème}}$ champ de vecteurs mouvement en utilisant le même algorithme d'estimation initialisé par le champ de vecteurs mouvement estimés au niveau précédent, les blocs de taille minimale étant des blocs de $2^{l+1},2^{l+1}$ pixels,
- et à déterminer un champ de vecteurs mouvement final à partir des p champs de vecteurs mouvement résultants, en choisissant le vecteur mouvement associé au bloc du niveau avec la taille de bloc la plus grande pour lequel bloc la somme des différences de luminance intertrames est inférieure à l'accumulation des sommes des différences de luminance intertrames réalisées sur tous les blocs de chaque niveau de partition compris dans ledit bloc.

L'invention sera mieux comprise et d'autres caractéristiques apparaîtront à l'aide de la description qui suit en référence aux figures annexées.

- La figure 1 illustre les informations utilisées classiquement pour estimer un champ de mouvement ;

- La figure 2 illustre les informations utilisées pour estimer un champ de mouvement selon l'invention ;
- La figure 3 illustre la décomposition d'un macrobloc en blocs plus petits suivant 5 niveaux hiérarchisé ;
- La figure 4 illustre l'enchainement des étapes du procédé d'estimation de mouvement selon l'invention ;
- Les figures 5a, 5b, 5c et 5d illustrent les vecteurs déplacements des blocs du niveau supérieur retenus comme valeurs initiales pour un bloc de niveau donné, selon les quatre positions possibles de ce dernier ;
- La figure 6 détaille les étapes de l'estimation de mouvement à un niveau donné ;
- La figure 7 détaille les tests mis en oeuvre pour la détermination du champ de vecteurs mouvement final ;
- La figure 8 illustre l'arbre de codage associé à la décomposition illustrée par la figure 3.

Une méthode d'estimation de mouvement dans une séquence d'images précédemment décrite et utilisée est rappelée ci-après succinctement pour la commodité de la description ultérieure de l'estimation de mouvement selon l'invention.

L'algorithme d'estimation de mouvement utilisé a été décrit notamment par A.N NETRAVALI et J.D. ROBBINS dans un article intitulé "Motion Compensated Television Coding, part. 1" tiré de "The Bell System Technical Journal", Vol. 58, n°3, March 1979.

Cet algorithme suppose que tous les éléments d'images élémentaires ou "pixels" d'un même bloc ont le même déplacement. Cet algorithme est récursif, et utilise le champ de mouvement calculé à l'itération précédente pour l'itération suivante à partir du développement de Taylor d'une quantité qui est la somme sur un bloc des différences de luminance des pixels de deux blocs de deux trames consécutives se correspondant par le déplacement estimé à l'itération précédente.

Soient :

- $z(x,y)$ les coordonnées d'un pixel z de la trame courante à l'instant t,
- $I(z,t)$, la valeur de luminance d'un pixel z à l'instant t,
- $Grad^X(z,t)$ et $Grad^Y(z,t)$ les composantes respectivement horizontale et verticale du gradient de luminance au pixel z à l'instant t,
- $D_{i-1}$ et $D_i$ les vecteurs de mouvement à deux composantes $D_ix$ et $D_iy$, $D_{i-1}x$ et $D_{i-1}y$ pour un bloc de pixels, respectivement à l'itération i et à l'itération précédente i-1 ;
- $DFD(z-D_{i-1},t-1)$ la différence inter-trames déplacée pour le pixel z, c'est-à-dire la différence entre la luminance du pixel z dans la trame courante à l'instant t, et la luminance du pixel déplacé correspondant à z dans la trame précédente (à l'instant t-1), c'est-à-dire z déplacé du vecteur mouvement $D_{i-1}$ calculé à l'itération précédente :

$$DFD(z-D_{i-1},t-1)=I(z,t)-I(z-D_{i-1}, t-1)$$

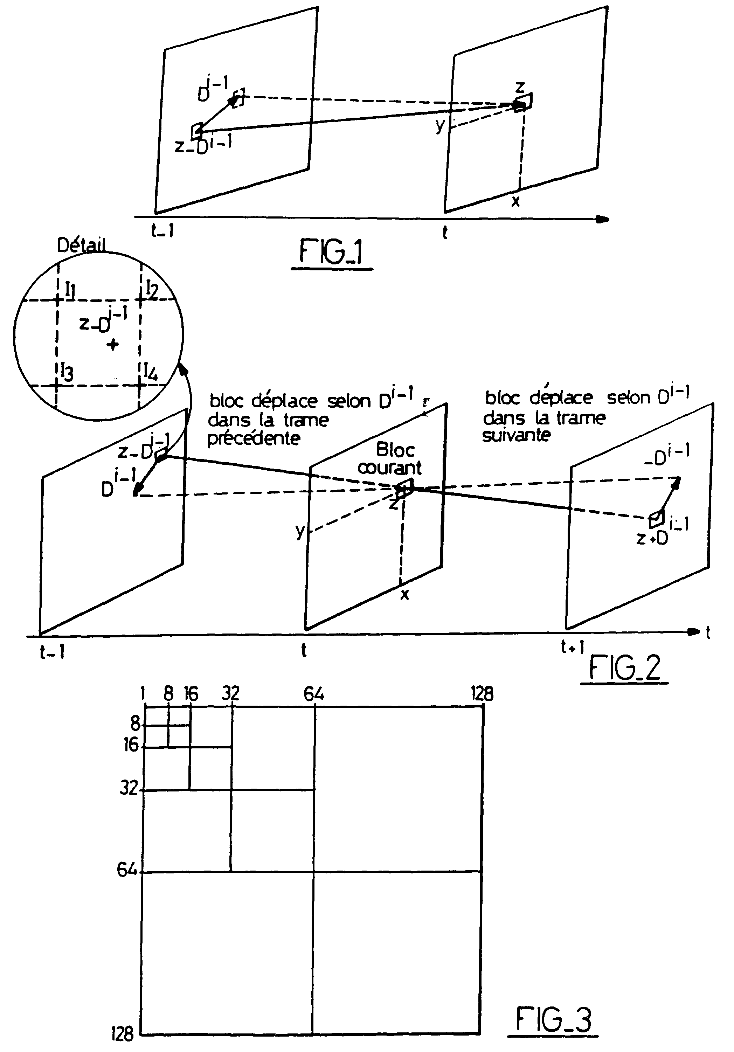

Compte-tenu de ces notations telles qu'illustrées par la figure 1, le vecteur de mouvement d'un pixel z à l'itération i, $D_i$, est déduit du vecteur de mouvement $D_{i-1}$ à l'itération précédente i-1 par les formules suivantes où les signes de sommation $\Sigma$ s'appliquent à l'ensemble des pixels z d'un bloc :

$$D_x^i=D_x^{i-1}-\frac{\sum DFD\left(z-D^{i-1},t-1\right)sg\left(grad^x(z,t)\right)}{\sum\left|grad^x(z,t)\right|}$$

$$D_y^i=D_y^{i-1}-\frac{\sum DFD\left(z-D^{i-1},t-1\right)sg(grad^y(z,t))}{\sum\left|grad^y(z,t)\right|}$$

L'algorithme utilisé selon l'invention est dérivé de cet algorithme spatio-temporel pour permettre une estimation de mouvement dite "symétrique". En effet, comme indiqué ci-dessus, les formules rappelées conduisent à l'estimation du mouvement des blocs de la trame courante à l'itération i à partir des mouvements estimés pour les mêmes blocs à l'itération i-1 et en calculant les différences de luminance entre le bloc courant et le bloc correspondant après déplacement dans la trame précédente.

Une estimation de mouvement "symétrique" selon l'invention utilise, pour l'estimation du mouvement dans une trame courante à l'itération i, la trame précédant, la trame courante et la trame suivante. Les gradients sont calculés dans les trames précédente et suivante et le vecteur de déplacement à l'itération i est alors calculé à partir du vecteur déplacement du bloc courant estimé à l'itération précédente i-1 par les équations suivantes (qui tiennent compte des différences de luminance entre les pixels du bloc courant et les pixels des blocs correspondants, déplacés de ce vecteur estimé précédemment, d'une part dans la trame précédente et d'autre part dans la trame suivante) :

$$D_x^i=D_x^{i-1}-\frac{\sum\left[DFD\left(z-D^{i-1},t-1\right)sg\left(grad^x\left(z-D^{i-1},t-1\right)\right)-DFD\left(z+D^{i-1},t+1\right)sg\left(grad^x\left(z+D^{i-1},t+1\right)\right)\right]}{\sum\left[grad^x\left(z-D^{i-1},t-1\right)+grad^x\left(z+D^{i-1},t+1\right)\right]}$$

$$D_y^i = D_y^{i-1} - \frac{\sum \left[ DFD\left(z-D^{i-1},t-1\right).sg\left(grad^y\left(z-D^{i-1},t-1\right)\right) - DFD\left(z+D^{i-1},t+1\right)sg\left(grad^y\left(z+D^{i-1},t+1\right)\right)\right]}{\sum \left[grad^y\left(z-D^{i-1},t-1\right) + grad^y\left(z+D^{i-1},t+1\right)\right]}$$

où sg(...) est la notation pour "signe de" la quantité qui suit.

Les composantes des vecteurs peuvent être des composantes non entières et une interpolation est nécessaire pour calculer la différence inter-trame déplacée, DFD, et les gradients. Pour cela les quatre éléments d'images les plus proches de l'élément d'image courant z sont utilisés.

La figure 2 montre la position des blocs déplacés dans la trame précédente et dans la trame suivante, correspondant à un bloc courant pour lequel le vecteur déplacement estimé à l'itération précédente est $D^{i-1}$ de la trame précédente à la trame courante et donc $-D^{i-1}$ de la trame suivante à la trame courante si l'on suppose des déplacements symétriques.

Un détail du voisinage de $z-D^{i-1}$ montre que, en général le vecteur déplacement conduit à un pixel déplacé $z-D^{i-1}$ (ou $z+D^{i-1}$) ayant une position qui ne correspond pas à des valeurs entières de x et y. En conséquence les valeurs de luminance des quatre points du voisinage de $z-D^{i-1}$ (ou $z+D^{i-1}$), $I_1$, $I_2$, $I_3$ et $I_4$ sont prises en compte pour les calculs de luminance des pixels déplacés et pour le calcul des gradients.

L'interpolation de la luminance I est bilinéaire, c'est-à-dire qu'elle est une somme pondérée de $I_1$, $I_2$, $I_3$ et $I_4$. Soient :

$\alpha = d(x-D_x^{i-1})$ et $\beta = d(y-D_y^{i-1})$ les parties décimales des composantes selon x et y du vecteur déplacement $D^{i-1}$ :

$$I(z-D^{i-1}) = (i-\alpha)\ (1-\beta)I_1 + \alpha\ (1-\beta)I_2 + (1-\alpha)\beta I_3 + \alpha\beta I_4$$

La même formule est appliquée pour le calcul de la luminance du pixel déplacé dans l'image suivante $I(z+D^{i-1})$ à partir des valeurs de luminance du voisinage de $z+D^{i-1}$.

Les gradients sont donnés par :

$$grad^x\left(z-D^{i-1},t-1\right) = \frac{(I_2-I_1) + (I_4-I_3)}{2}$$

$$grad^Y\left(z-D^{i-1},t-1\right) = \frac{(I_3-I_1) - (I_4-I_2)}{2}$$

avec $I_1$, $I_2$, $I_3$ et $I_4$ à t-1
et de même pour les gradients en $z+D^{i-1}$ à t+1.

Il faut donc accéder à 4 points dans les mémoires d'image précédente (t-1) et d'image suivante (t+1) pour calculer la luminance des points déplacés et les gradients correspondants.

A titre de simplification dans les notations ultérieures : $I(z-D^{i-1})$ sera noté I(t-1) et $I(z+D^{i+1})$ sera noté I(t+1) et de même $grad^X(z-D^{i-1}, t-1)$ sera noté $grad^X(t-1)$, $grad^X(z+D^{i-1}, t+1)$ sera noté $grad^X(t+1)$, les composantes selon y étant notées de la même manière, et les différences intertrames déplacées étant notées DFD(t-1) et DFD(t+1).

Ce type d'algorithme d'estimation de mouvement a deux paramètres critiques ; le nombre d'itérations permettant d'obtenir les valeurs finales, et la taille de la fenêtre de mesure ou "bloc" :

-   dans le but de diminuer le nombre d'itérations nécessaires pour obtenir le bon vecteur de déplacement, on utilise généralement une récursivité spatiale ou temporelle : pour une récursivité spatiale, les déplacements calculés dans le voisinage causal d'un bloc courant sont les valeurs initiales pour l'itération suivante ; une récursivité spatiale nécessite donc que les calculs des déplacements utilisés comme valeurs initiales soient terminés, ce qui conduit à des difficultés dans l'implantation. Une récursivité temporelle n'est pas bien adaptée pour les frontières d'objets. En conséquence la récursivité mise en oeuvre selon l'invention est une récursivité temporelle seulement pour l'initialisation de l'estimation de mouvement pour l'image courante et une récursivité spatiale particulière qui permet d'envisager une parallélisation des calculs d'estimation de mouvement de l'image courante.

L'algorithme d'estimation de mouvement suppose qu'une translation constante intervient pour tous les pixels compris à l'intérieur d'une fenêtre de mesure. Une solution idéale serait d'avoir une fenêtre de taille variable en fonction de la taille des zones d'images considérées : de larges fenêtres pourraient être utilisées pour des déplacements globaux, du type panoramiques ou basculements par exemple, tandis que de petites fenêtres seraient utilisées pour des éléments d'objets de tailles plus réduites.

Ce principe de classement des déplacements de manière hiérarchisée en fonction de la taille des zones en mouvement a été étudié par plusieurs auteurs, par exemple par H. BIERLING et R. THOMA dans un article intitulé "Motion compensating field interpolation using a hierachically structured displacement estimator" dans la revue -Signal Processing, 11, 1986 -387-404.

En résumé, les caractéristiques principales en sont :

- au premier niveau, des fenêtres de mesure de grande taille sont utilisées pour les grands déplacements ou pour les déplacements constants de grande surface.
- d'un niveau à l'autre la taille de la fenêtre décroît et les vecteurs déplacements sont mis à jour.
- la plus petite fenêtre correspond au champ de mouvement le plus précis.

Une telle structure hiérarchisée est intéressante car elle permet d'affiner l'estimation de mouvement là où les informations de mouvement ont la plus grande densité.

Généralement le champ de vecteurs mouvement résultant d'une estimation de mouvement selon l'un des algorithmes connus est formé de zones à déplacement constant ayant des tailles différentes quelconques, seulement liées au contenu de l'image. Une estimation de mouvement de type hiérarchisée classique telle que décrite ci-dessus génère des champs de mouvement correspondant donc à des blocs de tailles quelconques et le problème est alors de réunir ces différentes informations de mouvement dans le but d'obtenir pour chaque trame un champ de mouvement associé à des blocs de tailles aussi grandes que possible, correspondant à des zones à mouvement constant. En fait cette approche est proche de celle utilisée pour la construction d'un arbre de codage notamment pour un codage par quadrant ou "quadtree" tel que décrit dans un article de C.A. SHAFFER et H. SAMET intitulé "Optimal quadtree construction algorithm" dans -Computer vision graphics and image processing, vol. 37, 402-419 de 1987-.

En conséquence, selon l'invention, la méthode d'estimation de mouvement hiérarchisée est utilisée pour augmenter la convergence de l'algorithme d'estimation de mouvement récursif, mais elle est adaptée à la décomposition en quadrants de façon à obtenir simultanément l'estimation de mouvement et le codage correspondant de cette information de mouvement, de façon optimale. Pour adapter au mieux l'algorithme d'estimation de mouvement au codage de type "quadtree" qui sera fait ultérieurement du champ de mouvement résultant, les blocs d'un niveau sont le résultat du partage en quatre d'un bloc du niveau immédiatement supérieur comme représenté sur la figure 3 qui illustre les différentes tailles de blocs résultant de la partition.

De plus la récursivité est obtenue en utilisant le champ de mouvement obtenu à un niveau donné de la hiérarchie pour calculer le champ de mouvement du niveau immédiatement inférieur ; ainsi pour les calculs à l'intérieur d'un niveau donné, l'estimation de mouvement pour un bloc est indépendante de celle des autres blocs du voisinage au même niveau.

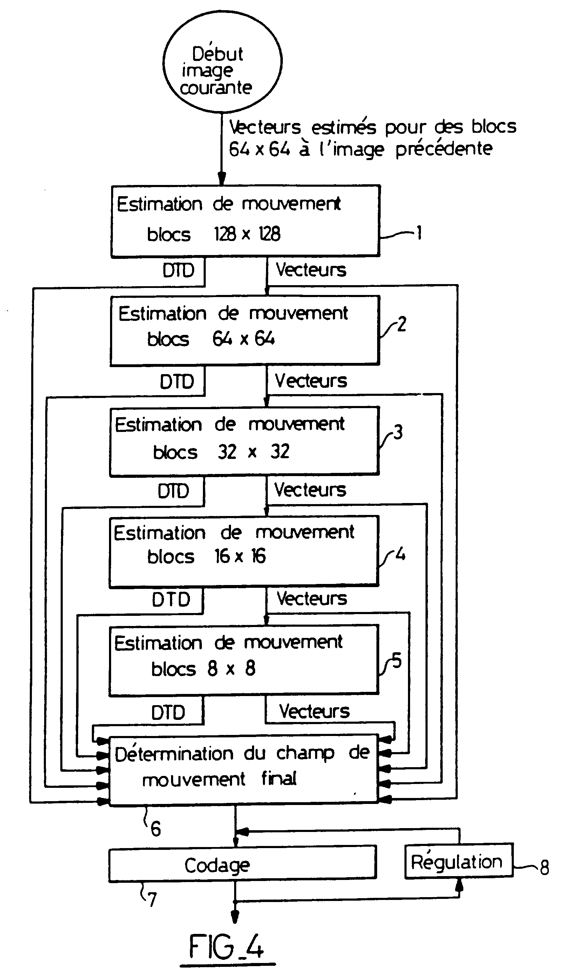

Ainsi un critère "a priori" est mis en oeuvre pour le calcul des vecteurs de déplacement, avec des valeurs initiales, et comme il va être expliqué plus en détails ci-après l'organisation des niveaux et les choix des calculs effectués sont déterminés pour être adaptés dans toute la mesure du possible au codage ultérieur du champ de mouvement résultant. La description qui suit, faite en référence à la figure 4, précise l'enchaînement des différentes étapes de l'estimation de mouvement et du codage associé, dans un mode de réalisation de l'invention.

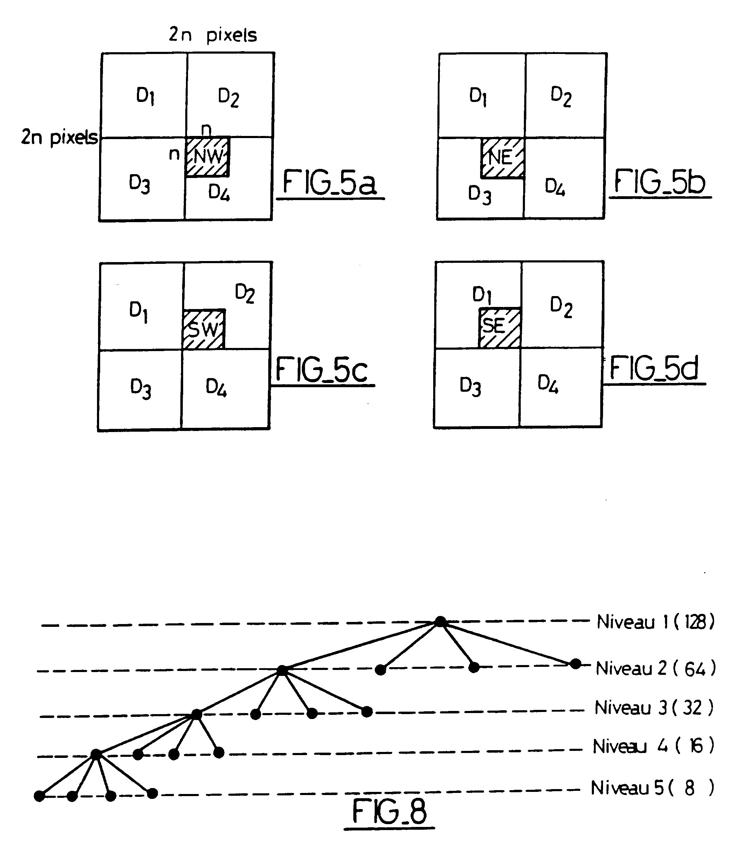

La taille maximale des blocs d'éléments d'image reconnue pour le codage étant 128x128 pixels et la taille minimale étant 8x8 par partages successifs de chaque bloc en 4 quadrants, le calcul a priori des vecteurs déplacement est effectué selon l'invention d'abord pour des blocs de 128.128 pixels (niveau 1), puis de 64.64 (niveau 2) puis de 32.32 (niveau 3), puis 16.16 (niveau 4) et enfin 8.8 pixels (niveau 5), indépendamment du contenu de l'image. Pour l'initialisation de l'estimation pour l'image courante, les quatre valeurs initiales pour les blocs les plus grands, au premier niveau (128.128) sont nulles ou quelconques pour la première image de la séquence, puis égales aux vecteurs de mouvement des blocs 64.64 (résultant de la partition en 4 des blocs 128.128) de l'image précédente de la séquence, pour les images suivantes. Puis les quatre valeurs initiales recueillies pour un bloc de taille n.n proviennent du niveau précédent, donc à une taille de bloc 2n.2n. Ces valeurs sont les déplacements estimés pour les quatre blocs les plus proches de taille supérieure, comme représenté sur les figures 5a, 5b, 5c et 5d où les quatre vecteurs de déplacement D1, D2, D3, D4 sont retenus lors d'un partage de blocs pour le passage au niveau suivant, selon la position de ce bloc dans le bloc de taille supérieure dont il est issu ; ces positions sont marquées respectivement NW pour Nord-Ouest figure Sa, NE pour Nord-Est figure 5b, SW pour Sud-Ouest figure 5c et SE pour Sud-Est sur la figure 5d.

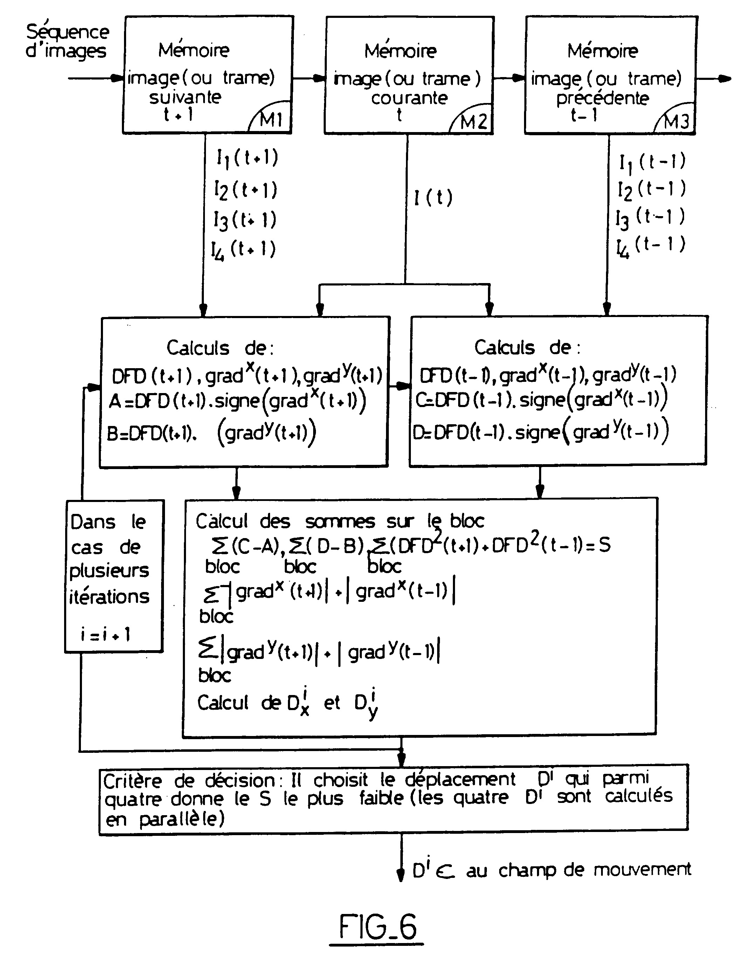

Une étape du procédé d'estimation de mouvement à un niveau n est décrite plus en détails ci-après en référence à la figure 6 où on a représenté les trois mémoires (ou zones mémoire) d'images (ou de trames) respectivement pour l'image suivant, $M_1$, (à $t+1$), l'image courante $M_2$ (à $t$), et l'image précédente, $M_3$ (à $t-1$), ainsi que les valeurs de luminance des 4 pixels entourant le pixel déplacé $z+D^{i-1}$ à la sortie de $M_1$, la valeur de luminance $I(t) = I(z,t)$ à la sortie de $M_2$, et les valeurs de luminance des 4 pixels entourant le pixel déplacé $Z-D^{i-1}$ à la sortie de $M_3$.

Une première étape de calcul par point donne les valeurs des différences intertrames déplacées et des gradients à partir des valeurs de luminance issues des mémoires et des vecteurs déplacement initiaux, par rapport à l'image précédente $t-1$, et par rapport à l'image suivante à $t+1$.

L'étape suivante consiste alors à calculer les composantes du vecteur déplacement selon les formules itératives données ci-dessus, $D_x^i$ et $D_y^i$ après avoir calculé les sommes partielles des différences telles que C-A et D-B sur l'ensemble du bloc correspondant de niveau n.

Les quatre valeurs initiales pour chaque bloc courant, correspondant à des blocs du voisinage de ce bloc courant mais d'un niveau différent, c'est-à-dire de taille immédiatement supérieure, permettent d'initialiser quatre estimations de mouvement séparées pour ce bloc (une seule a été représentée) et donnent lorsque les formules itératives de l'algorithme ont convergé quatre valeurs de vecteurs mouvement mises à jour, indépendantes, qui complètent les valeurs des vecteurs des niveaux précédents. Les carrés des différences intertrames DFD intermédiaires utilisés pour les mises à jour sont calculées, stockées en mémoire et additionnées pour l'ensemble du bloc, de façon à choisir pour chaque bloc à l'issue des 4 calculs, le "meilleur" déplacement parmi les quatre nouveaux vecteurs de déplacement mis à jour, c'est-à-dire celui pour lequel la somme S des différences intertrames élevées au carré pour ce bloc est minimale. Ce meilleur vecteur constitue alors l'un des vecteurs du champ de mouvement calculé au niveau n.

A l'issue de cette phase de détermination a priori, effectuée pour chacun des blocs des différents niveaux, un champ de vecteurs de mouvement différent correspondant à chaque niveau, c'est-à-dire à chaque taille de bloc, est disponible pour déterminer le champ de mouvement final adapté à la construction de l'arbre de codage, "quadtree" (voir figure 4).

Quand la taille des blocs diminue, quelques divergences peuvent intervenir si la taille des blocs est trop petite par rapport à l'information de luminance ou à la taille de l'objet. Mais à l'inverse pour de petits objets ou des objets non rectangulaires qui ne sont pas adaptés à la décomposition initiale en gros blocs, le décomposition devient de plus en plus adaptée lorsque la taille du bloc diminue. Ainsi le vecteur déplacement correct de chaque zone peut être trouvé parmi les cinq champs de mouvement disponibles pour des tailles de blocs variant entre 128.128 et 8.8.

A ce stade, le problème est de trouver le critère qui permet de déterminer le champ de mouvement final, étape 6 figure 4, à partir des cinq champs de mouvement ainsi calculés, avec des blocs de tailles aussi grandes que possibles, pour diminuer le débit de codage lors du codage effectué ensuite.

Comme indiqué ci-dessus à chaque niveau, la somme S sur un bloc des différences intertrames déplacées (élevées au carré) est stockée en mémoire. Ainsi pour un macrobloc de 128.128 pixels, cinq zones mémoires contiennent les différences de luminance intertrames déplacées élevées au carré, avec les vecteurs de déplacement associés DV(2) à deux composantes :

Au premier niveau, c'est-à-dire au niveau des macroblocs de 128.128 pixels, une valeur de somme des différences intertrames déplacées au carré $S_{128}$ est stockée pour chaque bloc, ainsi que le vecteur déplacement correspondant, à 2 composantes, $DV_{128}$ ; au niveau 2, chaque macrobloc ayant été partagé en 4 blocs de 64.64 pixels, 4 valeurs de sommes de différences déplacées au carré $S_{64}$ et quatre vecteurs de déplacement correspondant à deux composantes $DV_{64}$ sont stockés pour chacun des macroblocs ; etc... ; au niveau 5, un macrobloc ayant été partagé en 256 blocs de 8.8. pixels, une valeur de somme de différences déplacées au carré, $S_8$ et un vecteur déplacement $DV_8$ à 2 composantes correspondant à chacun des blocs élémentaires sont stockés en mémoire, soit 256 valeurs de $S_8$ et 256 vecteurs $DV_8$ à deux composantes pour un macrobloc.

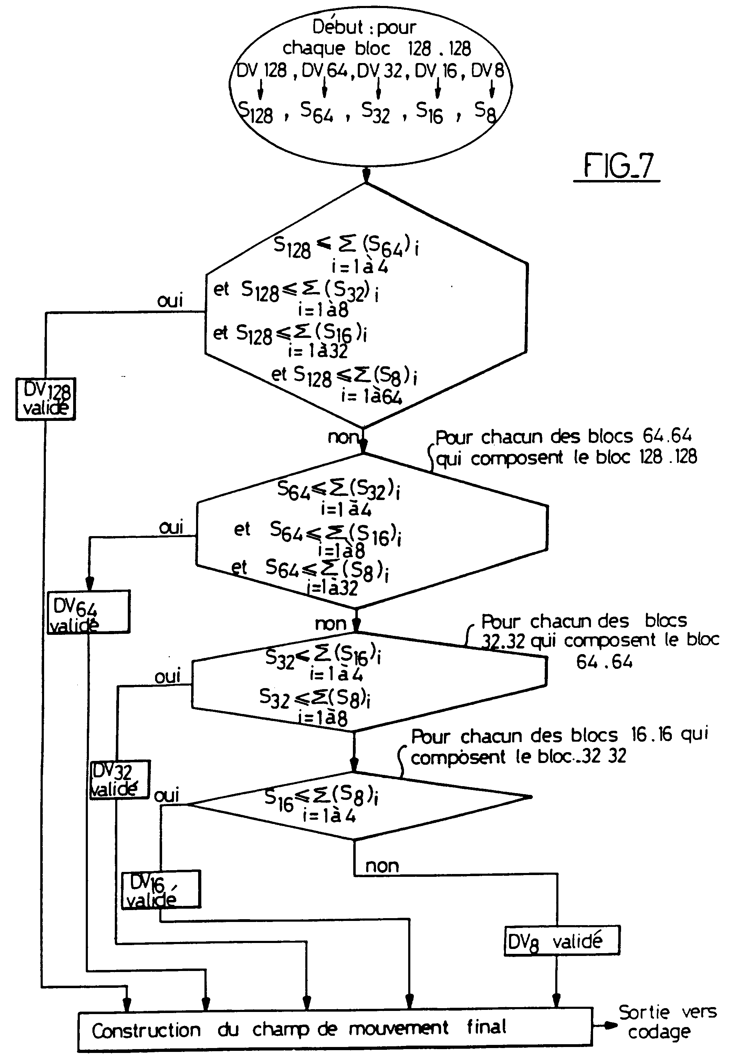

La détermination du champ de mouvement résultant à partir des 5 champs de mouvement calculés à ces 5 niveaux est effectuée de la manière suivante, illustrée par la figure 7 :

- Le vecteur déplacement $DV_{128}$ est affecté au macrobloc 128.128 si $S_{128}$ est plus petit ou égal à la somme des $S_{64}$, à la somme des $S_{32}$, à la somme des $S_{16}$ et à la somme des $S_8$ pour l'ensemble du macrobloc.
- Lorsque le vecteur mouvement $DV_{128}$ n'est pas alloué, l'allocation est essayée sur la base des blocs 64.64 pixels : un vecteur de déplacement $DV_{64}$ est alloué à un bloc 64.64 si la valeur $S_{64}$ est plus petite ou égale à la somme des $S_{32}$, à somme des $S_{16}$, et à la somme des $S_8$, sommées sur le bloc correspondant 64.64.
- Si un vecteur de déplacement $DV_{64}$ n'est pas alloué à un bloc 64.64, les vecteurs de déplacement des blocs correspondants de 32.32 éléments sont essayés et un vecteur de déplacement $DV_{32}$ est alloué à un bloc 32.32 pixels, si $S_{32}$ est plus petit ou égal à la somme des $S_{16}$ et à la somme des $S_8$, respectivement sommés sur le bloc correspondant 32.32.
- Si un bloc 32.32 n'a pas eu de vecteur alloué, les vecteurs de déplacement des blocs 16.16 correspondants, $DV_{16}$, sont essayés. Un vecteur de déplacement $DV_{16}$ est alloué à un bloc 16.16 si la valeur $S_{16}$ associée est plus petite ou égale à la somme des quatre valeurs correspondantes de niveau inférieur, $S_8$.
- Si un bloc 16.16 n'a pas eu de vecteur alloué, les vecteurs de déplacement $DV_8$ du dernier niveau sont alloués aux blocs 8.8 qui le composent.

La dernière étape alors mise en oeuvre est l'étape du codage "quadtree", 7, et de régulation du débit 8 (si nécessaire), comme représenté sur la figure 4. La connaissance des informations diminue le temps d'exécution de la construction de l'arbre de codage qui peut ainsi être moins coûteux si les vecteurs mouvement de blocs élémentaires sont connus. De plus la régulation du débit de codage de l'information de mouvement peut être aisément faite.

Un histogramme du champ de vecteurs de déplacement résultant de l'étape précédente est établi. Les vecteurs de déplacement correspondants à des pics de l'histogramme supérieurs à un seuil donné (ce seuil correspondant à une estimation de mouvement jugée correcte) sont sélectionnés. Ces vecteurs sont transmis pour chaque trame et leur nombre détermine le nombre de bits nécessaire pour qu'un mot de code puisse être affecté à chacun d'eux.

Le codage "quadtree" est effectué sur la base des macroblocs 128x128, et un arbre caractérise la décomposition de chacun de ces macroblocs telle qu'elle résulte du champ de mouvement final correspondant. Dans l'arbre, un noeud peut être une racine ou une feuille. Un mot de code spécial indique une racine, et une feuille correspond à un vecteur de déplacement. Le débit de codage pour un arbre est égal au nombre de noeuds multiplié par le nombre de bits des mots de code : pour une image haute définition constituée de 1152 lignes ayant chacune 1440 éléments d'image ou pixels, 108 macroblocs permettent de couvrir l'ensemble de l'image.

Une procédure de régulation du débit de codage peut être aisément effectuée en éliminant les vecteurs de mouvement les moins probables ou de manière plus brutale en stoppant la division des blocs à la dimension minimale 16x16 par exemple.

La figure 8 représente l'arbre de codage correspondant à un macrobloc décomposé comme représenté sur la figure 3. Si 15 vecteurs de déplacement différents ont été sélectionnés, il y a 16 noeuds différents, avec un mot de code spécial pour les racines ; donc 4 bits sont nécessaires ; en conséquence l'arbre, qui a 17 noeuds conduit à un nombre de bits, 17x4 = 68 bits.

La demande de brevet français n° 89 08547 au nom de la Demanderesse décrit plus en détails une procédure d'analyse du champ de mouvement et d'allocation de codes correspondant à partir des arbres de codage correspondant à la décomposition en quadrants et la régulation correspondante lorsque le débit requis est dépassé, également applicable au codage et à la régulation du champ de mouvement tel qu'il résulte du procédé d'estimation décrit ci-dessus.

Les résultats obtenus en suivant un tel procédé d'estimation de mouvement hiérarchisé associé à une technique de codage "quadtree" ont été évalués pour des signaux de télévision résultant d'une analyse entrelacée. L'estimation de mouvement est effectuée pour chaque trame paire, et cette information de mouvement est codée et transmise pour les trames impaires. A la réception, après le décodage de l'information de mouvement, les trames impaires sont interpolées à partir des trames paires et des informations de mouvement.

Trois types de séquences ont été testés, l'une correspondant au mouvement très rapide d'un élément d'image, une autre correspondant à une séquence d'images incluant des éléments ayant des mouvements variés, mouvements rapides et mouvements plus lents, et une séquence d'images correspondant à un zoom sur un dessin très fin. Les résultats obtenus sont compatibles avec les débits prévus dans les chaînes de télévision assistées numériquement.

Les avantages importants qui résultent du procédé d'estimation et de codage du mouvement de séquences d'images sont les suivants :

A un niveau donné le traitement d'un bloc est indépendant de celui des autres blocs et seuls les vecteurs de déplacement du voisinage défini au niveau précédent sont utilisés comme valeurs initiales. De plus la décomposition en arbres du champ de mouvement peut être construite rapidement car elle utilise une structure déjà existante à l'issue de l'estimation de mouvement.

Ce procédé d'estimation de mouvement est paramétrable comme requis pour être adapté aux différentes fonctions de la chaîne de transmission. En effet la taille du bloc de dimension minimale et le débit maximal sont des paramètres variables. La possibilité d'obtenir un vecteur de déplacement pour chaque pixel, c'est-à-dire un champ de vecteurs mouvement ponctuel, a même été testée. Pour cela on suppose que tous les vecteurs mouvement du champ de mouvement réel de l'image appartiennent au champ de mouvement final résultant de l'estimateur après détermination a priori des champs de mouvement des différents niveaux, c'est-à-dire qu'on n'effectue pas l'estimation à un niveau plus fin que celui des blocs 8.8. Puis, pour chaque pixel, on sélectionne dans ce champs de mouvement le vecteur qui conduit à la différence intertrames la plus faible. Ce vecteur est alors un élément du champ de mouvement ponctuel.

Le dispositif d'estimation selon l'invention, à la portée de l'homme de l'art, n'est pas représenté puisqu'il comporte principalement des mémoires d'images de la séquence, des moyens de calcul et des mémoires de stockage pour les résultats intermédiaires et pour les résultats finaux. Il faut cependant remarquer que l'implémentation du procédé d'estimation de mouvement selon l'invention est facilitée par le fait que les calculs, pour les différents macroblocs d'une trame (typiquement 108), puis à chaque niveau intermédiaire, peuvent être effectuées en parallèle puisque, comme indiqué ci-dessus, les calculs pour un bloc à un niveau donné n'utilisent que les valeurs déjà calculées au niveau précédent. De même, dans un niveau donné les quatre estimations séparées effectuées pour chacun des blocs à partir de quatre valeurs initiales différentes peuvent être effectuées en parallèle puisqu'elles sont indépendantes. La parallélisation du dispositif d'estimation peut donc être importante pourvu que les moyens de calcul le permettent.

Enfin l'estimateur de mouvement peut alimenter chaque équipement du studio qui nécessite l'information de mouvement ou l'information de mouvement codée.

**EP 0 441 941 B1**

**Revendications**

1. Procédé d'estimation et de codage hiérarchisé du mouvement de séquences de trames d'images, consistant :

   - à un premier niveau de partition, à découper l'image courant en macroblocs de $2^{P+1}.2^{P+1}$ pixels et à déterminer un premier champ de vecteurs mouvement, chaque vecteur mouvement étant associé à un macrobloc, en utilisant un algorithme d'estimation itératif et récursif initialisé par des vecteurs mouvement estimés pour l'image précédente,
   - puis à un deuxième niveau de partition, à découper en quadrants chacun des macroblocs et à déterminer, pour les blocs qui en résultent, un second champ de vecteurs mouvement en utilisant le même algorithme d'estimation mais initialisé par le champ de vecteurs mouvement estimé au niveau précédent,
   - puis à un $i^{ème}$ niveau de partition, $i = 3$ à $p$, à découper chacun des blocs considérés au niveau i-1 en quadrants et à déterminer, pour les blocs qui en résultent, un $i^{ème}$ champ de vecteurs mouvement en utilisant le même algorithme d'estimation initialisé par le champ de vecteurs mouvement estimé au niveau précédent, les blocs de taille minimale étant des blocs de $2^{1+I}.2^{1+I}$ pixels, caractérisé en ce que l'on détermine un champ de vecteurs mouvement final à partir des p champs de vecteurs mouvement résultants, en choisissant le vecteur mouvement ($DV_{128}$, $D_{64}$, $DV_{32}$, $DV_{16}$ et $DV_{8}$) associé au bloc du niveau avec la taille de bloc la plus grande pour lequel bloc la somme ($S_{128}$, $S_{64}$, $S_{32}$, ..., $S_{8}$) des différences de luminance intertrames est inférieure à l'accumulation des sommes des différences de luminance intertrames réalisées sur tous les blocs de chaque niveau de partition compris dans ledit bloc.

2. Procédé selon la revendication 1, caractérisé en ce que l'algorithme d'estimation de mouvement utilisé est symétrique et utilisé, pour la détermination d'un vecteur mouvement à un rang d'itération i, le vecteur mouvement déterminé à l'itération i-1 diminué de quantités fonction de différences de luminance intertrames déplacées, c'est-à-dire des sommes de différences de luminance entre les pixels du bloc courant et les pixels des blocs correspondant au bloc courant déplacés du vecteur mouvement, respectivement dans la trame précédente et dans la trame suivante de la séquence.

3. Procédé selon l'une des revendications 1 et 2, caractérisé en ce que, pour chaque bloc, l'algorithme d'estimation de mouvement est mis en oeuvre quatre fois, initialisé par quatre vecteurs mouvement respectivement associés

   - à la première étape, aux quatres blocs de niveau inférieur constituant chaque macrobloc, pris dans le champ de mouvement de deuxième niveau de l'image précédente,
   - dans les étapes suivantes, à quatre blocs du niveau précédent appartenant à un voisinage du bloc courant, dans la même image,
   - et en ce que le vecteur choisi parmi les quatre vecteurs résultants pour former le vecteur du champ de mouvement correspondant est celui correspondant à la minimisation au critère de choix, à savoir celui qui donne la différence de luminances intertrames déplacées la plus faible.

4. Procédé selon la revendication 3, caractérisé en ce que les quatre vecteurs mouvement d'initialisation des blocs du niveau précédent utilisés comme valeurs initiales pour l'estimation d'un bloc courant sont le vecteur associé au bloc de niveau précédent dont il est issu, et les trois vecteurs associés aux blocs du niveau précédent contigus à ce bloc courant.

5. Procédé selon l'une des revendications 1 à 4, caractérisé en ce que le champ de mouvement final, hiérarchisé est directement associé à un arbre de codage, de type "quadtree", correspondant à la hiérarchie des blocs et des vecteurs mouvement correspondants des différents niveaux sélectionnés pour le champ de mouvement final, et en ce qu'une régulation du débit de codage résultant est effectuée par sélection du champ de mouvement final adapté au débit requis.

6. Procédé selon la revendication 5, caractérisé en ce que la régulation est effectuée lorsque le débit requis est dépassé, en éliminant du champ de vecteurs mouvement final les vecteurs les moins fréquents et en les remplaçant par les vecteurs les plus proches, de fréquence plus grande.

7. Procédé selon la revendication 5, caractérisé en ce que la régulation est effectuée lorsque le débit requis est dépassé, en écartant les vecteurs du champ de mouvement associé aux blocs de taille minimale de la sélection du champ de mouvement final.

8. Procédé selon la revendication 1, caractérisé en ce que les calculs itératifs mis en oeuvre à un niveau donné sont effectués en parallèle, les calculs d'un niveau donné prenant leurs valeurs d'initialisation à un niveau précédent.

9. Procédé selon l'une des revendications 3 et 4, caractérisé en ce que les quatre calcules de vecteurs mouvement effectués pour chaque bloc sont effectués en parallèle, ces calculs prenant leurs valeurs d'initialisation à un niveau précédent.

10. Procédé selon la revendication 1, caractérisé en ce que p est choisi égal à 5 et 1 égal à 2, les macroblocs étant des blocs de 128.128 pixels et les blocs de taille minimale étant des blocs de 8.8 pixels, le procédé d'estimation étant hiérarchisé en 5 niveaux.

11. Procédé selon la revendication 1, caractérisé en ce qu'un champ de mouvement ponctuel est établi à partir du champ de mouvement final, en allouant à chaque pixel le vecteur de mouvement du champ final pour lequel une différence de luminance intertrames entre ce pixel et le pixel déplacé du vecteur mouvement correspondant dans la trame précédente est minimisée.

12. Dispositif d'estimation et de codage hiérarchisé du mouvement de séquences de trames d'images, comportant :

- des moyens pour découper à un premier niveau de partition l'image courant en macroblocs de $2^{p+l} \cdot 2^{p+l}$ pixels et à déterminer un premier champs de vecteurs mouvement, chaque vecteur mouvement étant associé à un macrobloc, en utilisant un algorithme d'estimation itératif et récursif initialisé par des vecteurs mouvement estimés pour l'image précédente,
- des moyens pour découper en quadrants à un deuxième niveau de partition chacun des macroblocs et pour déterminer, pour les blocs qui en résultent, un second champ de vecteurs mouvement en utilisant le même algorithme d'estimation mais initialisé par le champ de vecteurs mouvement estimé au niveau précédent,
- des moyens pour découper à un $i^{ème}$ niveau de partition, i=3 à p, chacun des blocs considérés au niveau i-1 en quadrants et pour déterminer, pour les blocs qui en résultent, un $i^{ème}$ champ de vecteurs mouvement en utilisant le même algorithme d'estimation initialisé par le champ de vecteurs mouvement estimé au niveau précédent, les blocs de taille minimale étant des blocs de $2^{1+l} \cdot 2^{1+l}$ pixels,

caractérisé en ce qu'il comporte

- des moyens pour déterminer un champ de vecteurs mouvement final à partir des p champs de vecteurs mouvement résultant, en choisissant le vecteur mouvement ($DV_{128}$, $DV_{64}$, $DV_{32}$, $DV_{16}$ et $DV_8$) associé au bloc du niveau avec la taille de bloc la plus grande pour lequel bloc la somme ($S_{128}$, $S_{64}$, $S_{321}$..., $S_8$) des différences de luminance intertrames est inférieure à l'accumulation des sommes des différences de luminance intertrames réalisées sur tous les blocs de chaque niveau de partition compris dans ledit bloc, et

en ce qu'il comporte une mémoire d'images, des moyens de calcul et des mémoires de travail, les moyens de calcul étant prévus pour effectuer en parallèle les calculs itératifs mis en oeuvre à un niveau donné, les calculs d'un niveau donné prenant leurs valeurs d'initialisation à un niveau précédent.

**Patentansprüche**

1. Verfahren zur Schätzung und hierarchische. Codierung der Bewegung von Halbbildfolgen mit folgenden Schritten:

- auf einer ersten Teilungsebene, dem Zerlegen des aktuellen Bildes in Makroblöcke mit $2^{p+1}.2^{p+1}$ Pixeln und dem Bestimmen eines ersten Feldes von Bewegungsvektoren, wobei jeder Bewegungsvektor einem Makroblock zugeordnet ist, durch Verwendung eines iterativen und rekursiven Schätzungsalgorithmus, der von für das vorhergehende Bild geschätzten Bewegungsvektoren initialisiert wird,
- danach, auf einer zweiten Teilungsebene, dem Zerlegen jedes der Makroblöcke in Quadranten und dem Bestimmen für die sich daraus ergebenden Blöcke eines zweiten Bewegungsvektorfeldes durch Verwendung desselben Schätzungsalgorithmus, der jedoch von dem auf der vorhergehenden Ebene geschätzten Feld von Bewegungsvektoren initialisiert wird,
- danach, auf einer i-ten Teilungsebene, i = 3 bis p, dem Zerlegen jedes der auf Ebene i-1 in Betracht gezogenen Blöcke in Quadranten und dem Bestimmen für die sich daraus ergebenden Blöcke eines i-ten Feldes von Bewegungsvektoren unter Verwendung desselben Schätzungsalgorithmus, initialisiert durch das auf der vorhergehenden Ebene geschätzte Feld von Bewegungsvektoren, wobei die Blöcke mit Mindestgröße Blöcke mit $2^{1+1}.2^{1+1}$ Pixeln sind, gekennzeichnet durch das Bestimmen eines Bewegungsvektorendfeldes aus den sich ergebenden p Bewegungsvektorfeldern durch Wählen des dem Block der Ebene mit der größten Blockgröße zugeordneten Bewegungsvektors ($DV_{128}$, $DV_{64}$, $DV_{32}$, $DV_{16}$, und $DV_8$), für welchen Block die Summe ($S_{128}$, $S_{64}$, $S_{32}$,..., $S_8$,) der kleiner als die Gesamtsumme der Zwischenbildluminanzdifferenzen über alle Blöcke jeder Teilungsebene im besagten Block Zwischenbildluminanzdifferenzen ist.

2. Verfahren nach Anspruch 1, dadurch gekennzeichnet, daß der benutzte Bewegungsschätzungsalgorithmus symmetrisch ist und für die Bestimmung eines Bewegungsvektors auf einem Iterationsrang i den bei der Iteration i-l bestimmten Bewegungsvektor abzüglich von Größen als Funktion von verschobenen zwischenbildluminanzdifferenzen benutzt, d.h. der Summen der Luminanzdifferenzen zwischen den Pixeln des aktuellen Blocks und den Pixeln der Blöcke, die dem aktuellen Block verschoben um den Bewegungsvektor im vorhergehenden Halbbild bzw. im nachfolgenden Halbbild der Folge entsprechen.

3. Verfahren nach einem der Ansprüche 1 und 2, dadurch gekennzeichnet, daß für jeden Block der Bewegungsschätzungsalgorithmus viermal angelegt wird, initialisiert durch vier Bewegungsvektoren, die jeweils verbunden sind mit

   - im ersten Schritt, den vier Blöcken einer unteren Ebene, die jeden Makroblock bilden, entnommen dem Bewegungsfeld der zweiten Ebene des vorhergehenden Bildes,
   - in den folgenden Schritten, vier Blöcken der vorhergehenden Ebene, die einer Umgebung des aktuellen Blocks zugehören, im selben Bild,
   - und dadurch, daß der unter den vier resultierenden Vektoren ausgewählte Vektor zum Bilden des entsprechenden Bewegungsfeldvektors derjenige ist, der der Minimierung des Wahlkriteriums entspricht, nämlich derjenige, der die geringste Differenz an verschobenen Zwischenbildluminanzen ergibt.

4. Verfahren nach Anspruch 3, dadurch gekennzeichnet, daß die vier Bewegungsvektoren zur Initialisierung der Blöcke der vorhergehenden Ebene, die als Anfangswerte für die Schätzung eines aktuellen Blocks benutzt werden, den Vektor, der mit dem Block der vorangehenden Ebene, von der er kommt, verbunden ist und die drei Vektoren, die mit den mit diesem aktuellen Block zusammenhängenden Blöcken der vorangehenden Ebene verbunden sind, darstellen.

5. Verfahren nach einem der Ansprüche 1 bis 4, dadurch gekennzeichnet, daß das hierarchische Bewegungsendfeld unmittelbar mit einem Codierbaum der "quadtree" - Art verbunden ist, entsprechend der Hierarchie der Blöcke und der entsprechenden Bewegungsvektoren der verschiedenen Ebenen, die für das Bewegungsendfeld ausgewählt worden sind, und daß durch Auswahl des an den erforderlichen Durchsatz angepaßten Bewegungsendfeldes eine Regelung des resultierenden Codierungsdurchsatzes ausgeführt wird.

6. Verfahren nach Anspruch 5, dadurch gekennzeichnet, daß die Regelung dann durchgeführt wird, wenn der erforderliche Durchsatz überschritten ist, indem die seltensten Vektoren vom Bewegungsvektorendfeld eliminiert werden und durch die nahesten und häufigsten Vektoren ersetzt werden.

7. Verfahren nach Anspruch 5, dadurch gekennzeichnet, daß die Regelung dann ausgeführt wird, wenn der erforderliche Durchsatz überschritten ist, indem die Vektoren des Bewegungsfeldes, die mit den Blöcken mit Mindestgröße verbunden sind, aus der Auswahl des Bewegungsendfeldes entfernt werden.

8. Verfahren nach Anspruch 1, dadurch gekennzeichnet, daß die auf einer gegebenen Ebene eingesetzten iterativen Berechnungen parallel zueinander ausgeführt werden, wobei die Berechnungen einer gegebenen Ebene ihre Initialisierungswerte einer vorangehenden Ebene entnehmen.

9. Verfahren nach einem der Ansprüche 3 und 4, dadurch gekennzeichnet, daß die vier Berechnungen der Bewegungsvektoren, die für jeden Block ausgeführt werden, parallel zueinander ausgeführt werden, wobei diese Berechnungen ihre Initialisierungswerte einer vorangehenden Ebene entnehmen.

10. Verfahren nach Anspruch 1, dadurch gekennzeichnet, daß p gleich 5 und 1 gleich 2 ist, wobei die Makroblöcke Blöcke mit 128.128 Pixeln sind und die Blöcke mit Mindestgröße Blöcke mit 8.8 Pixeln sind, wobei das Schätzungsverfahren hierarchisch in 5 Ebenen gegliedert ist.

11. Verfahren nach Anspruch 1, dadurch gekennzeichnet, daß ein Punktbewegungsfeld aus dem Bewegungsendfeld hergestellt wird, indem jedem Pixel der Bewegungsvektor des Endfeldes zugeordnet wird, für den eine Zwischenbildluminanzdifferenz zwischen diesem Pixel und dem um den entsprechenden Bewegungsvektor verschobenen Pixel im vorangehenden Halbbild minimiert ist.

12. Vorrichtung zur Schätzung und hierarchischen Codierung der Bewegung von Halbbildfolgen mit folgenden:

- Mittel zum Zerlegen, auf einer ersten Teilungsebene, des aktuellen Bildes in Makroblöcke mit $2^{p+1}.2^{p+1}$ Pixeln und zum Bestimmen eines ersten Feldes von Bewegungsvektoren, wobei jeder Bewegungsvektor einem Makroblock zugeordnet ist, durch Verwendung eines iterativen und rekursiven Schätzungsalgorithmus, der von für das vorhergehende Bild geschätzten Bewegungsvektoren initialisert wird,
- Mittel zum Zerlegen, auf einer zweiten Teilungsebene, jedes der Makroblöcke in Quadranten und zum Bestimmen für die sich daraus ergebenden Blöcke eines zweiten Bewegungsvektorfeldes durch Verwendung desselben Schätzungsalgorithmus, der jedoch von dem auf der vorhergehenden Ebene geschätzten Bewegungsvektorfeld initialisiert wird,
- Mittel zum Zerlegen, auf einer i-ten Teilungsebene, i = 3 bis p, jedes der auf Ebene i-1 in Betracht gezogenen Blöcke in Quadranten und zum Bestimmen für die sich daraus ergebenden Blöcke eines i-ten Bewegungsvektorfeldes unter Verwendung desselben Schätzungsalgorithmus, intialisiert von dem auf der vorhergehenden Ebene geschätzten Bewegungsvektorfeld, wobei die Blöcke mit Mindestgröße Blöcke mit $2^{1+1}.2^{1+1}$ Pixeln sind, dadurch gekennzeichnet, daß sie folgendes umfaßt:
- Mittel zum Bestimmen eines Bewegungsvektorendfeldes aus den sich ergebenden p Bewegungsvektorfeldern durch Wählen des dem Block der Ebene mit der größten Blockgröße zugeordneten Bewegungsvektors ($DV_{128}$, $DV_{64}$, $DV_{32}$, $DV_{16}$ und $DV_8$), für welchen Block die Summe ($S_{128}$, $S_{64}$, $S_{32}$,..., $S_8$,) der Zwischenbildluminanzdifferenzen kleiner als die Gesamtsumme der über alle Blöcke jeder Teilungsebene im besagten Block realisierten Zwischenbildluminanzdifferenzen ist, und daß sie einen Bildspeicher, Rechenmittel und Arbeitsspeicher umfaßt, wobei die Rechenmittel zur parallelen Ausführung der iterativen Berechnungen, die auf einer gegebenen Ebene eingesetzt werden, vorgesehen sind, wobei die Berechnungen auf einer gegebenen Ebene ihre Initialisierungswerte einer vorhergehenden Ebene entnehmen.

**Claims**

1. Method for estimating and hierarchically coding the motion of sequences of rasters of images, consisting:

   - at a first splitting level, in partitioning the current image into $2^{p+1}.2^{p+1}$ pixel macroblocks and in determining a first field of motion vectors, each motion vector being associated with a macroblock, by using an iterative and recursive estimation algorithm initialized by motion vectors estimated for the preceding image,
   - then, at a second splitting level, in partitioning into quadrants each of the macroblocks and in determining, for the blocks which result therefrom, a second field of motion vectors by using the same estimation algorithm but initialized by the field of motion vectors which was estimated at the preceding level,
   - then at an ith splitting level, i = 3 to p, in partitioning each of the blocks considered at the i-1 level into quadrants and in determining, for the blocks which result therefrom, an ith field of motion vectors by using the same estimation algorithm initialized by the field of motion vectors which was estimated at the preceding level, the blocks of minimum size being $2^{1+1}.2^{1+1}$ pixel blocks, characterized in that a final field of motion vectors is determined from the p resulting motion vector fields, by choosing the motion vector ($DV_{128}$, $DV_{64}$, $DV_{32}$, $DV_{16}$, and $DV_8$,) associated with the block of the level with the largest block size for which block the sum ($S_{128}$, $S_{64}$, $S_{32}$,..., $S_8$,) of the differences in inter-raster brightness is less than the cumulative sum of the differences in inter-raster brightness taken over all the blocks of each splitting level within the said block.

2. Method according to Claim 1, characterized in that the motion estimation algorithm used is symmetric and uses, for the determination of a motion vector at an iteration rank i, the motion vector determined at the iteration i-1 less quantities depending on displaced inter-raster brightness differences, that is to say sums of differences of brightness between the pixels of the current block and the pixels of blocks corresponding to the current block which are displaced by the motion vector, in the preceding raster and in the following raster of the sequence respectively.

3. Method according to one of Claims 1 and 2, characterized in that, for each block, the motion estimation algorithm is applied four times, initialized by four motion vectors respectively associated

   - at the first step, with the four blocks of lower level constituting each macroblock, taken from the second level field of motion of the preceding image,
   - in the following steps, with four blocks of the preceding level belonging to a neighbourhood of the current block, in the same image,

and in that the vector chosen from the four resulting vectors to form the vector of the corresponding field of motion is the one corresponding to the minimization of the choice criterion, namely the one which gives the lowest displaced inter-raster brightness difference.

4. Method according to Claim 3, characterized in that the four motion vectors for initializing the blocks of the preceding level which are used as initial values for the estimation of a current block are the vector associated with the block of preceding level from which it issues, and the three vectors associated with the blocks of the preceding level which are adjacent to this current block.

5. Method according to one of Claims 1 to 4, characterized in that the final, hierarchical field of motion is directly associated with a coding tree, of "quadtree" type, corresponding to the hierarchy of the blocks and of the corresponding motion vectors of the various levels selected for the final field of motion, and in that an adjustment of the resulting coding throughput is performed by selecting the final field of motion suited to the required throughput.

6. Method according to Claim 5, characterized in that the adjustment is performed, when the required throughput is exceeded, by eliminating from the final motion vector field, the least frequent vectors and by replacing them by the closest vectors of greater frequency.

7. Method according to Claim 5, characterized in that the adjustment is performed, when the required throughput is exceeded, by removing the vectors of the field of motion which is associated with the blocks of minimum size from the selection of the final field of motion.

8. Method according to Claim 1, characterized in that the iterative calculations applied at a given level are performed in parallel, the calculations of a given level taking their initialization values at a preceding level.

9. Method according to one of Claims 3 and 4, characterized in that the four motion vector calculations performed for each block are performed in parallel, these calculations taking their initialization values at a preceding level.

10. Method according to Claim 1, characterized in that p is chosen equal to 5 and 1 equal to 2, the macroblocks being 128.128 pixel blocks and the blocks of minimum size being 8.8 pixel blocks, the estimation method being hierarchically structured into 5 levels.

11. Method according to Claim 1, characterized in that a point field of motion is established from the final field of motion by allocating to each pixel the motion vector of the final field for which an inter-raster brightness difference between this pixel and the pixel displaced by the corresponding motion vector in the preceding raster is minimized.

12. Device for estimating and hierarchically coding the motion of sequences of rasters of images, including:

- means for partitioning, at a first splitting level, the current image into $2^{p+1}.2^{p+1}$ pixel macroblocks and in [sic] determining a first field of motion vectors, each motion vector being associated with a macroblock, by using an iterative and recursive estimation algorithm initialized by motion vectors estimated for the preceding image,
- means for partitioning into quadrants, at a second splitting level, each of the macroblocks and for determining, for the blocks which result therefrom, a second field of motion vectors by using the same estimation algorithm but initialized by the field of motion vectors which was estimated at the preceding level,
- means for partitioning, at an ith splitting level, i = 3 to p, each of the blocks considered at the i-1 level into quadrants and for determining, for the blocks which result therefrom, an ith field of motion vectors by using the same estimation algorithm initialized by the field of motion vectors which was estimated at the preceding level, the blocks of minimum size being $2^{1+1} \cdot 2^{1+1}$ pixel blocks, characterized in that it includes
- means for determining a final field of motion vectors from the p resulting motion vector fields, by choosing the motion vector ($DV_{128}$, $DV_{64}$, $DV_{32}$, $DV_{16}$ and $DV_8$) associated with the block of the level with the largest block size for which block the sum ($S_{128}$, $S_{64}$, $S_{32}$, ..., $S_8$) of the differences in inter-raster brightness is less than the cumulative sum of the differences in inter-raster brightness taken over all the blocks of each splitting level within the said block, and in that it comprises an image memory, calculating means and work memories, the calculating means being provided to perform, in parallel, the iterative calculations applied at a given level, the calculations of a given level taking their initialization values at a preceding level.

FIG_1

FIG_2

FIG_3

FIG.4

2n pixels

$D_1$ $D_2$

2n pixels

$D_3$ NW $D_4$

FIG_5a

$D_1$ $D_2$

NE

$D_3$ $D_4$

FIG_5b

$D_1$ $D_2$

SW

$D_3$ $D_4$

FIG_5c

$D_1$ $D_2$

SE

$D_3$ $D_4$

FIG_5d

Niveau 1 ( 128 )

Niveau 2 ( 64 )

Niveau 3 ( 32 )

Niveau 4 ( 16 )

Niveau 5 ( 8 )

FIG_8

Séquence d'images

| Mémoire image (ou trame) suivante $t+1$ /M1 | Mémoire image (ou trame) courante $t$ /M2 | Mémoire image (ou trame) précédente $t-1$ /M3 |

$I_1(t+1)$
$I_2(t+1)$
$I_3(t+1)$
$I_4(t+1)$

$I(t)$

$I_1(t-1)$
$I_2(t-1)$
$I_3(t-1)$
$I_4(t-1)$

Calculs de:
$DFD(t+1), grad^x(t+1), grad^y(t+1)$
$A = DFD(t+1).signe(grad^x(t+1))$
$B = DFD(t+1). (grad^y(t+1))$

Calculs de:
$DFD(t-1), grad^x(t-1), grad^y(t-1)$
$C = DFD(t-1).signe(grad^x(t-1))$
$D = DFD(t-1).signe(grad^y(t-1))$

Dans le cas de plusieurs itérations

$i = i+1$

Calcul des sommes sur le bloc
$$\sum_{bloc}(C-A), \sum_{bloc}(D-B), \sum_{bloc}(DFD^2(t+1)+DFD^2(t-1)=S$$
$$\sum_{bloc} |grad^x(t+1)| + |grad^x(t-1)|$$
$$\sum_{bloc} |grad^y(t+1)| + |grad^y(t-1)|$$
Calcul de $D_x^i$ et $D_y^i$

Critère de décision: Il choisit le déplacement $D^i$ qui parmi quatre donne le S le plus faible (les quatre $D^i$ sont calculés en parallèle)

$D^i \subset$ au champ de mouvement

FIG_6

$$\text{Début : pour chaque bloc } 128 . 128$$
$$DV\,128\,,\,DV\,64\,,\,DV\,32\,,\,DV\,16\,,\,DV\,8$$
$$\downarrow \qquad \downarrow \qquad \downarrow \qquad \downarrow \qquad \downarrow$$
$$S_{128}\,,\,S_{64}\,,\,S_{32}\,,\,S_{16}\,,\,S_8$$

<u>FIG.7</u>

$$S_{128} \leq \sum_{i=1\,à\,4}(S_{64})_i$$
$$et \; S_{128} \leq \sum_{i=1\,à\,8}(S_{32})_i$$
$$et \; S_{128} \leq \sum_{i=1\,à\,32}(S_{16})_i$$
$$et \; S_{128} \leq \sum_{i=1\,à\,64}(S_8)_i$$

oui

DV$_{128}$ validé

non

Pour chacun des blocs 64.64 qui composent le bloc 128 .128

$$S_{64} \leq \sum_{i=1\,à\,4}(S_{32})_i$$
$$et \; S_{64} \leq \sum_{i=1\,à\,8}(S_{16})_i$$
$$et \; S_{64} \leq \sum_{i=1\,à\,32}(S_8)_i$$

oui

DV$_{64}$ validé

non

Pour chacun des blocs 32.32 qui composent le bloc 64 .64

$$S_{32} \leq \sum_{i=1\,à\,4}(S_{16})_i$$
$$S_{32} \leq \sum_{i=1\,à\,8}(S_8)_i$$

oui

DV$_{32}$ validé

Pour chacun des blocs 16.16 qui composent le bloc .32 32

$$S_{16} \leq \sum_{i=1\,à\,4}(S_8)_i$$

oui

DV$_{16}$ validé

non

DV$_8$ validé

Construction du champ de mouvement final

Sortie vers codage